# FASCICULE DE BREVET EUROPEEN

(11) **EP 2 342 262 B1**
(45) Date de publication et mention de la délivrance du brevet: **05.04.2017**
(21) Numéro de dépôt: 09755971.0
(22) Date de dépôt: 06.10.2009
(51) Int. Cl.: C08G 69/40, C08G 81/00, C08G 18/48, C08G 63/66, C08G 63/672, C08G 69/44, C08G 73/18

(54) **COPOLYMERE A BLOCS ISSU DE MATIERES RENOUVELABLES ET PROCEDE DE FABRICATION D'UN TEL COPOLYMERE A BLOCS**
AUS ERNEUERBAREN MATERIALIEN GEWONNENES BLOCKCOPOLYMER UND VERFAHREN ZUR HERSTELLUNG EINES SOLCHEN BLOCKCOPOLYMERS
BLOCK COPOLYMER DERIVED FROM RENEWABLE MATERIALS AND METHOD FOR MAKING SUCH A BLOCK COPOLYMER

(30) Priorité: 06.10.2008 FR 0856752
(43) Date de publication de la demande: 13.07.2011
(73) Titulaire: Arkema France, 92700 Colombes (FR)
(72) Inventeur: MALET, Frédéric, F-76000 Rouen (FR); LE, Guillaume, F-14460 Colombelles (FR); JOUANNEAU, Julien, F-27500 Pont-Audemer (FR)
(74) Mandataire: Bandpay & Greuter
(86) Numéro de dépôt international: PCT/FR2009/051900
(87) Numéro de publication internationale: WO 2010/040944

(56) Documents cités:
- WO-A-86/01512
- FR-A- 2 896 444
- FR-A- 2 909 675
- GB-A- 1 289 571
- US-A- 2 846 449
- US-A1- 2005 165 210
- US-A1- 2008 023 887
- HERBERT MÜLLER: "Tetrahydrofuran" ULLMANN'S ENCYCLOPEDIA OF INDUSTRIAL CHEMISTRY, [Online] 15 juin 2000 (2000-06-15), pages 1-6, XP002522728 Extrait de l'Internet: URL:http://dx.doi.org/10.1002/14356007.a26 _221> [extrait le 2009-04-06]
- UKIELSKI R: "New multiblock terpoly(ester-ether-amide) thermoplastic elastomers with various chemical composition of ester block" POLYMER, ELSEVIER SCIENCE PUBLISHERS B.V, GB, vol. 41, no. 5, 1 mars 2000 (2000-03-01), pages 1893-1904, XP004244182 ISSN: 0032-3861

## Description

### Domaine de l'invention

La présente invention se rapporte aux polymères thermoplastiques élastomères (abrégé TPE), et notamment les polymères techniques de haute valeur ajoutée utilisés dans des secteurs variés, tels que l'électronique, l'automobile ou le sport. La présente invention concerne plus particulièrement un polymère thermoplastique élastomère issu de matières premières renouvelables. L'invention a également pour objet un procédé de fabrication d'un tel polymère thermoplastique élastomère issu de matières renouvelables.

Dans les élastomères thermoplastiques conventionnels, on trouve essentiellement des ingrédients d'origine pétrolière ou d'origine synthétique. Leurs procédés d'obtention sont parfois considérés comme polluants sur l'environnement.

En effet, les matières premières utilisées pour la synthèse de ces ingrédients sont obtenues par vapocraquage ou craquage catalytique de coupes pétrolières. L'utilisation de ces matières contribue à l'augmentation de l'effet de serre. Etant donnée la diminution des réserves pétrolières mondiales, la source de ces matières premières vient peu à peu à s'épuiser.

Les matières premières issues de la biomasse sont de source renouvelable et ont un impact réduit sur l'environnement. Elles ne nécessitent pas toutes les étapes de raffinage coûteuses en énergie des produits pétroliers. La production de CO₂ est réduite de sorte qu'elles contribuent moins au réchauffement climatique.

Il apparaît donc nécessaire de disposer de procédés de synthèse non dépendants de matière première d'origine fossile, mais utilisant plutôt des matières premières d'origine renouvelable.

Aujourd'hui, les fabricants qui utilisent des TPE adoptent de plus en plus une démarche d'écoconception et sont à la recherche de plastiques de haute valeur ajoutée d'origines végétales.

Par ailleurs, sur des marchés aussi concurrentiels que celui du sport ou de l'automobile, les fabricants doivent répondre à la demande des consommateurs pour des matériaux polymères associant performances techniques et environnementales. Or ces performances dépendent à la fois des matières premières et des procédés utilisés.

La présente invention a donc pour but de fournir des TPE, qui répondent à ces exigences, à la fois en terme de propriétés mécaniques, de résistance chimique ou au vieillissement et en terme d'éthique écologique et biologique.

### Technique antérieure

Par polymère thermoplastique élastomère (TPE), on entend un copolymère à blocs comprenant, en alternance, des blocs ou segments dits durs ou rigides (au comportement plutôt thermoplastique) et des blocs ou segments dits souples ou flexibles (au comportement plutôt élastomère). Les blocs souples sont généralement à base de polyéthers (PE) choisis parmi le poly(éthylène glycol) (PEG), le poly(1,2-propylène glycol) (PPG), le poly(1,3-propylène glycol) (PO3G), le poly(tétraméthylène glycol) (PTMG), et leurs copolymères ou mélanges. Les blocs rigides sont généralement à base de polyamide, de polyuréthane, de polyester ou d'un mélange de ces polymères.

A titre d'exemple de copolymère à blocs durs et à blocs souples, on peut citer respectivement (a) les copolymères à blocs polyester et blocs polyéther (appelés aussi COPE ou copolyétheresters), (b) les copolymères à blocs polyuréthane et blocs polyéther (appelés aussi TPU abréviation de polyuréthanes thermoplastiques) et (c) les copolymères à blocs polyamide et blocs polyéther (appelés aussi PEBA selon l'IUPAC).

Dans le domaine des élastomères thermoplastiques tels que les TPU ou les COPE, des produits fabriqués partiellement à partir de matières premières d'origine renouvelable ont été commercialisés récemment. A titre d'exemple, les TPU commercialisés sous la marque Pearlthane® ECO-D12T95 par Merquinsa revendiquent un taux de carbone renouvelable de 38% selon l'ASTM-D6866. On peut également citer la gamme de COPE commercialisée sous la marque Hytrel® RS par Dupont. Ce COPE comprend un PO3G issu de ressources renouvelables qui remplace les polyols pétrochimiques.

Quant aux PEBA, ils sont majoritairement obtenus à partir de matières premières d'origine fossile, qui seules permettent d'atteindre les compromis coûts/performances nécessaires à certaines applications.

En effet, les PEBA ou Polyether-Bloc-Amide, tels que ceux commercialisés par la Société Arkema sous le nom Pebax®, sont des élastomères thermoplastiques sans plastifiant qui appartiennent à la famille des polymères techniques. Ils peuvent être facilement traités par moulage par injection et extrusion de profilés ou films. Ils peuvent aussi être mis en oeuvre sous forme de filaments, fils et fibres pour tissus et non-tissés. Ils sont utilisés dans des applications de haute valeur ajoutée et en particulier :
- le sport de haut niveau, notamment comme éléments de semelles de chaussures de sprint, football, rugby, tennis, basket-ball, course à pied, ski alpin ou nordique, mais aussi dans les balles de golf, et dans bien d'autres articles de sport ;
- l'industrie, notamment comme bande de courroie transporteuse, comme produit imper-respirant ou comme additif antistatique ;
- le domaine médical, notamment comme cathéter, ballon d'angioplastie, courroie péristaltique ;
- l'automobile, notamment comme cuir synthétique, peaux, tableau de bord, élément d'airbag, etc...

Ils permettent de combiner dans un même polymère des propriétés mécaniques inégalées à une très bonne résistance au vieillissement thermique ou sous UV, ainsi qu'une faible densité. Ils permettent ainsi l'élaboration de pièces légères. En particulier, à dureté équivalente, ils dissipent moins d'énergie que les autres matériaux, ce qui leur confère une très bonne résistance aux sollicitations dynamiques en flexion ou traction, et ils présentent des propriétés de retour élastique exceptionnel.

Depuis 2007, la gamme « Pebax® Rnew » commercialisée par Arkema, est la seule à proposer une gamme d'élastomères thermoplastiques techniques dont le taux de carbone d'origine renouvelable varie d'environ 20% à 95%, selon la teneur en polyamide d'origine renouvelable de l'élastomère thermoplastique. En effet le PEBA classique est un élastomère thermoplastique obtenu à partir de polyamide 12 (ou de polyamide 6) pour le bloc rigide et de PTMG pour le bloc souple, ces deux blocs étant fabriqués à partir de matières d'origine fossile.

Pour le bloc rigide, une première démarche pour évoluer vers des matières premières renouvelables a consisté à choisir un polyamide fabriqué à partir de matières premières d'origine végétale, tel que l'acide amino-11-undécanoïque. En effet, l'acide amino-11-undécanoïque est issu du traitement de l'huile de ricin (Castor oil, en anglais), extraite de la plante du même nom (le Ricin commun), à partir des graines de ricin. Le remplacement du PA 12 par le PA 11, obtenu par polycondensation de l'acide amino-11-undécanoïque, dans la fabrication de PEBA apporte, en plus d'un impact environnemental moindre, un matériau dont certaines propriétés sont supérieures à celles du matériau d'origine fossile. En particulier, les PEBA fabriqués à base de PA 11 ne présentent plus de seuil de plasticité lors de sollicitation sous contrainte, ce qui permet d'améliorer non seulement la résistance au choc à froid, mais également la résistance à la fatigue en flexion. La résistance thermique est également améliorée ainsi que la rigidification à froid.

Pour le bloc souple polyéther, en revanche, il n'existe pas actuellement d'alternative renouvelable au PTMG, autre que des polyethers PO3G mis sur le marché récemment par Dupont sous la marque Cerenol®, ou des polyesters souples, à base d'acide gras dimérisé, commercialisés par Uniqema sous la marque Priplast®. Toutefois, l'utilisation desdits blocs polyéthers uniquement PO3G ou polyesters uniquement Priplast® pour la fabrication des PEBA ne permet pas d'atteindre les mêmes performances qu'avec des blocs PTMG, en terme de densité, de reprise en eau et/ou de propriétés mécaniques.

La présente invention a donc pour but de concevoir un nouveau TPE à la fois d'origine renouvelable et de haute performance. La présente invention a notamment pour but de fournir un TPE d'origine renouvelable, mais de performances au moins équivalentes à celles du TPE classique d'origine fossile.

La présente invention a également pour but de fournir un procédé de fabrication d'un tel TPE qui soit simple, facile à mettre en oeuvre, rapide (qui présente le moins d'étapes possibles), et qui ne nécessite pas l'intervention de manipulations chimiques ou technologiques lourdes, coûteuses en énergie ou polluantes, pour avoir un impact environnemental le plus faible possible.

Fort de son expertise dans la fabrication de polymères bioressourcés haute performance, la demanderesse a maintenant démontré qu'il était possible de fabriquer un TPE :
- dont les blocs polyether souples sont d'origine renouvelable, grâce à l'utilisation de tétrahydrofurane contenant du ¹⁴C, notamment grâce à l'utilisation de blocs PTMG fabriqués à partir de biomasse, et
- dont les performances sont au moins identiques à celles des TPE correspondants dont les blocs polyether sont d'origine fossile.

### Résumé de l'invention

L'invention a pour objet un copolymère à blocs polyamide 6.12 (bloc rigide) et polytétraméthylène glycol (bloc souple), le bloc polytétraméthylène glycol étant issu en totalité de matières renouvelables.

Avantageusement, le copolymère à blocs selon l'invention comprend:
- de 1 à 99% de bloc polytétraméthylène glycol souple, et
- de 1 à 99% de bloc polyamide 6.12 rigide.

Avantageusement, la proportion massique dudit un bloc souple représente de 5 à 95%, et la proportion massique dudit bloc rigide représente de 5 à 95%, sur la masse totale du copolymère.

Avantageusement, ledit bloc PA 6.12 rigide est issu au moins partiellement de matières premières renouvelables.

Avantageusement, ledit bloc PA6.12 rigide est issu en totalité de matières renouvelables.

Avantageusement, le copolymère selon l'invention comprend une teneur en bio-carbone d'au moins 1%, qui correspond à un ratio isotopique de ¹⁴C/¹²C d'au moins 1,2.10⁻¹⁴.

Avantageusement, le copolymère selon l'invention comprend une teneur en bio-carbone supérieure à 5%.

Ledit copolymère comprend en outre un bloc souple polytétraméthylène glycol (PTMG), le bloc polytétraméthylène glycol étant issu en totalité de matières renouvelables.

La présente invention a également pour objet un procédé de préparation de copolymère à blocs conforme à celui défini précédemment, comprenant l'étape de fourniture de polytétraméthylène glycol issu de tétrahydrofurane contenant du 14C et la transformation par synthèse en copolymère à blocs.

Avantageusement, l'étape de fourniture comprend une étape de production dudit tétrahydrofurane à partir de furfural.

Avantageusement, l'étape de fourniture comprend une étape de production dudit furfural à partir de biomasse végétale. Avantageusement, ledit furfural est produit par hydrolyse de pentosanes.

La présente invention a également pour objet l'utilisation de copolymère à blocs conforme à celui défini précédemment, dans l'automobile, les textiles, les tissés, les non-tissés, l'habillement, les chaussures, les articles de sport, les articles de loisirs, l'électronique, le matériel informatique, les équipements de santé, les additifs industriels, l'emballage et/ou les produits ménagers.

Avantageusement, le copolymère à blocs selon l'invention est utilisé dans les tableaux de bord, les airbags, les semelles de chaussure de sport, les balles de golf, les tubes à usage médical, les cathéters, les ballons d'angioplastie, les courroies péristaltiques, les bandes de courroie transporteuse, les produits imper-respirant, les additifs antistatiques, les peaux, et/ ou les cuirs synthétiques.

Avantageusement, le copolymère à blocs de l'invention est utilisé seul ou en mélange, ledit copolymère représentant en masse de 5 à 100%.

### Description détaillée de l'invention :

L'invention utilise les produits d'origine naturelle comme produits de départ pour la fabrication de thermoplastiques élastomères.

Le carbone d'un biomatériau provient de la photosynthèse des plantes et donc du CO₂ atmosphérique. La dégradation (par dégradation, on entendra aussi la combustion/incinération en fin de vie) de ces matériaux en CO₂ ne contribue donc pas au réchauffement puisqu'il n'y a pas d'augmentation du carbone émis dans l'atmosphère. Le bilan CO₂ des biomatériaux est donc nettement meilleur et contribue à réduire l'empreinte carbone des produits obtenus (seule l'énergie pour la fabrication est à prendre en compte). Au contraire, un matériau d'origine fossile se dégradant aussi en CO₂ va contribuer à l'augmentation du taux de CO₂ et donc au réchauffement climatique.

Les composés selon l'invention auront donc une empreinte carbone qui sera meilleure que celle de composés obtenus à partir d'une source fossile.

L'invention améliore donc aussi le bilan écologique lors de la fabrication des TPE.

Le terme de "bio-carbone" indique que le carbone est d'origine renouvelable, ou d'origine naturelle et provient d'un biomatériau, comme indiqué ci-après. La teneur en biocarbone et la teneur en biomatériau sont des expressions désignant la même valeur.

Un matériau d'origine renouvelable, appelé aussi biomatériau, est un matériau organique dans lequel le carbone provient de CO₂ fixé récemment (à l'échelle humaine) par photosynthèse à partir de l'atmosphère. Sur terre, ce CO₂ est capté ou fixé par les plantes. En mer, le CO₂ est capté ou fixé par des bactéries ou du plancton procédant à une photosynthèse. Un biomatériau (100% de carbone origine naturelle) présente un ratio isotopique ¹⁴C/¹²C supérieur à 10⁻¹², typiquement de l'ordre de 1,2 x 10⁻¹², tandis qu'un matériau fossile a un ratio nul. En effet, l'isotope ¹⁴C se forme dans l'atmosphère et est ensuite intégré par photosynthèse, selon une échelle de temps de quelques dizaines d'années au plus. La demi-vie du ¹⁴C est de 5730 ans. Donc les matériaux issus de la photosynthèse, à savoir les végétaux de manière générale, ont nécessairement une teneur maximale en isotope ¹⁴C.

La teneur en biomatériau ou teneur en biocarbone est déterminée en application des normes ASTM D 6866 (ASTM D 6866-06) et ASTM D 7026 (ASTM D 7026-04). La norme ASTM D 6866 a pour objet "Determining the Biobased Content of Natural Range Materials Using Radiocarbon and Isotope Ratio Mass Spectrometry Analysis", tandis que la norme ASTM D 7026 a pour objet "Sampling and Reporting of Results for Détermination of Biobased Content of Materials via Carbon Isotope Analysis". La seconde norme renvoie dans son premier paragraphe à la première.

La première norme décrit un test de mesure du ratio ¹⁴C/¹²C d'un échantillon et le compare avec le ratio ¹⁴C/¹²C d'un échantillon référence d'origine 100% renouvelable, pour donner un pourcentage relatif de C d'origine renouvelable dans l'échantillon. La norme est basée sur les mêmes concepts que la datation au ¹⁴C, mais sans faire application des équations de datation.

Le ratio ainsi calculé est désigné comme le "pMC" (percent Modern Carbon). Si le matériau à analyser est un mélange de biomatériau et de matériau fossile (sans isotope radioactif), alors la valeur de pMC obtenu est directement corrélée à la quantité de biomatériau présent dans l'échantillon. La valeur de référence utilisée pour la datation au ¹⁴C est une valeur datant des années 1950. Cette année a été choisie en raison de l'existence d'essais nucléaires dans l'atmosphère qui ont introduit des grandes quantités d'isotopes dans l'atmosphère après cette date. La référence 1950 correspond à une valeur pMC de 100. Compte tenu des essais thermonucléaires, la valeur actuelle à retenir est d'environ 107,5 (ce qui correspond à un facteur de correction de 0,93). La signature en carbone radioactif d'un végétal actuel est donc de 107,5. Une signature de 54 pMC et de 99 pMC correspondent donc à une quantité de biomatériau dans l'échantillon de 50% et de 93%, respectivement.

La norme ASTM D 6866 propose trois techniques de mesure de la teneur en isotope ¹⁴C:
- LSC (Liquid Scintillation Counting) spectrométrie à scintillation liquide. Cette technique consiste à compter des particules "Bêta" issues de la désintégration du ¹⁴C. On mesure le rayonnement Bêta issu d'un échantillon de masse connue (nombre d'atomes C connu) pendant un certain temps. Cette "radioactivité" est proportionnelle au nombre d'atomes de ¹⁴C, que l'on peut ainsi déterminer. Le ¹⁴C présent dans l'échantillon émet des rayonnements ß, qui au contact du liquide scintillant (scintillateur) donnent naissance à des photons. Ces photons ont des énergies différentes (comprises entre 0 et 156 keV) et forment ce que l'on appelle un spectre de ¹⁴C. Selon deux variantes de cette méthode, l'analyse porte soit sur le CO₂ préalablement produit par l'échantillon carboné dans une solution absorbante appropriée, soit sur le benzène après conversion préalable de l'échantillon carboné en benzène. La norme ASTM D 6866 donne donc deux méthodes A et C, basées sur cette méthode LSC.
- AMS/IRMS (Accelerated Mass Spectrometry couplé avec Isotope Radio Mass Spectrometry). Cette technique se base sur la spectrométrie de masse. L'échantillon est réduit en graphite ou en CO₂ gazeux, analysé dans un spectromètre de masse. Cette technique utilise un accélérateur et un spectromètre de masse pour séparer les ions ¹⁴C des ¹²C et donc déterminer le rapport des deux isotopes.

Les composés selon l'invention proviennent au moins en partie de biomatériau et présentent donc une teneur en biomatériau d'au moins 1%, ce qui correspond à une teneur en ¹⁴C d'au moins 1,2 x 10⁻¹⁴. Cette teneur est avantageusement plus élevée, notamment jusqu'à 100%, qui correspond à une teneur en ¹⁴C de 1,2 x 10⁻¹². Les composés selon l'invention peuvent donc comprendre 100% de bio-carbone ou au contraire résulter d'un mélange avec une origine fossile.

Les composés selon l'invention sont, comme indiqué supra, des thermoplastiques élastomères (TPE) issus au moins partiellement de matières premières d'origine renouvelable.

Plus précisément, la présente invention a pour objet des élastomères thermoplastiques (TPE), copolymères à blocs polyamide 6.12 et polytétraméthylène glycol, le bloc polytétraméthylène glycol étant issu en totalité de matières renouvelables.

Par blocs polyéther (abrégé ci-après PE) au sens de l'invention on entend
du poly(tétraméthylène glycol) (PTMG) d'origine
renouvelable.

Le polytétraméthylène glycol, aussi appelé α-hydro-ω-hydroxypoly(oxy-1,4-butanediyl) ou encore polyoxytétraméthylène glycol, peut aussi être abrégé PTMG ou PTHF ou PTMEG ou PO4G, abrégé PTMG dans la présente description. Ainsi, les blocs polyéthers des TPE selon l'invention comprennent au moins un motif -O-(CH2)₄-, dans lequel les carbones sont des bio-carbones.

Avantageusement, ledit au moins un polyéther issu d'au moins un mononomère THF contenant du ¹⁴C, par exemple le PTMG, est synthétisé à partir de tétrahydrofurane qui est lui-même synthétisé à partir de furfural (aussi appelé 2-furaldéhyde ou furfuraldéhyde) qui est le dérivé de divers produits secondaires agricoles comme le maïs, le son d'avoine et de blé, et la sciure.

En outre, les élastomères thermoplastiques (TPE) selon l'invention comprennent au moins un bloc rigide choisi parmi les blocs polyamide 6.12 .

Les blocs rigides peuvent être issus de matières renouvelables et/ou de matières d'origine fossile. De manière avantageuse, lesdits blocs rigides sont également issus au moins partiellement de matières renouvelables. Selon un mode particulièrement avantageux de la présente invention, les blocs polyéther et/ou les blocs polyamide sont issus en totalité de matières renouvelables.

Ainsi, selon le choix des composants des blocs souples et rigides, la teneur en bio-carbone du copolymère de l'invention est d'au moins 1%, ce qui correspond à un ratio isotopique de ¹⁴C/¹²C d'au moins 1,2.10⁻¹⁴. La teneur en bio-carbone du copolymère de l'invention est de préférence supérieure à 5%.

Par polyamide au sens de l'invention on entend les homopolyamides et copolyamides ; c'est-à-dire les produits de condensation des lactames, des aminoacides ou des diacides avec les diamines et, en règle générale, tout polymère formé par des motifs reliés entre eux par des groupes amides.

Le terme « monomère » dans la présente description des copolyamides doit être pris au sens d' « unité répétitive ». En effet, le cas où une unité répétitive du PA est constituée de l'association d'un diacide avec une diamine est particulier. On considère que c'est l'association d'une diamine et d'un diacide, c'est-à-dire le couple diamine.diacide (en quantité équimolaire), qui correspond au monomère. Ceci s'explique par le fait qu'individuellement, le diacide ou la diamine n'est qu'une unité structurale, qui ne suffit pas à elle seule à polymériser.

A titre d'exemples d'aminoacides d'origine renouvelable, on peut citer: l'acide 11-aminoundecanoïque produit à partir d'huile de ricin par exemple, l'acide 10-aminodécanoïque produit à partir de l'acide decylénique obtenu par métathèse de l'acide oléïque par exemple, l'acide 9-aminononanoïque produit à partir de l'acide oléïque par exemple.

A titre d'exemples de diacides d'origine renouvelable, on peut citer, en fonction du nombre x de carbones de la molécule (Cx) :
- C4 : l'acide succinique à partir du glucose par exemple ;
- C6 : l'acide adipique à partir du glucose par exemple ;
- C7 : l'acide heptanedioïque à partir d'huile de ricin ;
- C9 : l'acide azélaïque à partir de l'acide oléïque (ozonolyse) par exemple ;
- C10 : l'acide sébacique à partir de l'huile de ricin par exemple ;
- C11 : l'acide undécanedioïque à partir d'huile de ricin ;
- C12 : l'acide dodécanedioïque à partir de biofermentation de l'acide dodecanoïque = acide laurique (huile riche : huile de palmiste et noix de coco) par exemple ;
- C13 : acide brassylique à partir de l'acide erucique (ozonolyse) que l'on trouve dans le colza par exemple;
- C14 : acide tetradécanedioïque par biofermentation de l'acide myristique (huile riche : huile de palmiste et noix de coco) par exemple ;
- C16 : acide hexadécanedioïque par biofermentation de l'acide palmitique (huile de palme principalement) par exemple ;
- C18 : acide octadécanedioïque obtenu par biofermentation de l'acide stéarique (un peu dans toutes les huiles végétales mais majoritaire dans les graisses animales) par exemple ;
- C20 : acide eicosanedioïque obtenu par biofermentation de l'acide arachidique (majoritaire dans l'huile de colza) par exemple ;
- C22 : acide docosanedioïque obtenu par métathèse de l'acide undécylénique (huile de ricin) par exemple
- C36 : dimère d'acide gras issu principalement des acides oléiques et linoléiques.

A titre d'exemples de diamines d'origine renouvelable, on peut citer, en fonction du nombre x de carbones de la molécule (Cx) :
- C4 : butanediamine obtenu par amination de l'acide succinique, par biofermentation ;
- C5 : pentaméthylene diamine (à partir de lysine) ;
et ainsi de suite pour les diamines obtenues par amination des diacides d'origine renouvelable vus précédemment.

Par polyamide d'origine partiellement renouvelable, c'est-à-dire issu en partie seulement de matières renouvelables (nommé dans le texte polyamide « mixte »), on entend :
- les produits de condensation d'un acide dicarboxylique avec une diamine, et dans lesquels l'un des deux seulement (le diacide ou la diamine sont d'origine renouvelable. C'est le cas du PA 6.10 par exemple, puisque dans le monomère 6.10, seul l'acide sébacique est d'origine renouvelable tandis que l'héxaméthylène diamine est issue de la pétrochimie.
- les copolyamides résultant de la polymérisation de divers monomères (renouvelables, non renouvelables ou mixtes) tels que ceux cités ci-dessus. C'est le cas par exemple du CoPA 6.6/10.10 dans lequel le monomère « 6.6 » est d'origine non renouvelable tandis que le monomère « 10.10 » est d'origine renouvelable. C'est le cas également du PA 11/10.T par exemple, qui comporte un monomère d'origine renouvelable (« 11 ») et un monomère mixte d'origine partiellement renouvelable (« 10.T ») puisque seule la décanediamine est d'origine renouvelable, alors que l'acide téréphtalique (T) ne l'est pas.

Par polyamide d'origine fossile, on entend tous les autres polyamides de la Terre n'entrant pas dans les deux catégories précitées, c'est-à-dire qui ne sont pas fabriqués à partir de matières premières organiques renouvelables.

Le copolymère à blocs de la présente invention forme un polyéther bloc amide, abrégé PEBA.

Les PEBA selon l'invention sont des copolymères à blocs polyamide 6.12 et polytétraméthylène glycol, le bloc polytétraméthylène glycol étant issu en totalité de matières renouvelables.

Les PEBA résultent de la polycondensation de blocs polyamides à extrémités réactives avec des blocs polyéthers à extrémités réactives, telles que, entre autres :
1) blocs polyamides à bouts de chaîne diamines avec des blocs polyoxyalkylènes à bouts de chaînes dicarboxyliques.
2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols
3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne.

Les blocs polyamides à bouts de chaînes diamines proviennent par exemple de la condensation de précurseurs de polyamides en présence d'une diamine limiteur de chaîne. La masse molaire en nombre Mn des blocs polyamides est comprise dans la gamme allant de 400 à 20000 g/mol, de préférence de 500 à 10000 g/mol, et de préférence encore de 600 et 6000 g/mol.

Les polymères à blocs polyamides et blocs polyéthers peuvent aussi comprendre des motifs répartis de façon aléatoire.

Les blocs polyéthers peuvent représenter 1 à 99%, et de préférence 5 à 90 % en poids du copolymère à blocs polyamides et polyéthers. La masse molaire Mn des blocs polyéther est comprise dans la gamme allant de 100 à 6 000 g/mol et de préférence de 200 à 3 000 g/mol, encore plus préférentiellement de 250 à 2000 g/mol.

La préparation des copolymères à bloc(s) polyamide et bloc(s) polyéther selon l'invention comprend tout moyen permettant d'accrocher les blocs polyamide (bloc PA) et les blocs polyéther (bloc PE) selon la présente invention. En pratique, on utilise essentiellement deux procédés l'un dit en 2 étapes, l'autre en une étape.

Dans le procédé en une étape on mélange les précurseurs de polyamide, le limiteur de chaînes et le polyéther. Ainsi, dans le procédé en une étape on fabrique aussi des blocs polyamide. La polycondensation simultanée des blocs polyéthers et des précurseurs des blocs polyamides est conduite de préférence à une température de 180 à 300°C. On obtient alors un polymère ayant essentiellement des blocs polyéthers, des blocs polyamides de longueur très variable, mais aussi les différents réactifs ayant réagi de façon aléatoire qui sont répartis de façon statistique (aléatoire) le long de la chaîne polymère.

Que ce soit en une ou deux étapes il est avantageux d'opérer en présence d'un catalyseur. Par catalyseur, on entend tout produit permettant de faciliter la liaison des blocs polyamide et des blocs polyéther par estérification ou par amidification. Le catalyseur d'estérification est avantageusement un dérivé d'un métal choisi dans le groupe formé par le titane, le zirconium et l'hafnium ou encore un acide fort tel que l'acide phosphorique ou l'acide borique. On peut utiliser les catalyseurs décrits dans les brevets US 4 331 786, US 4 115 475, US 4 195 015, US 4 839 441, US 4 864 014, US 4 230 838 et US 4 332 920, WO 04 037898, EP 1262527, EP 1270211, EP 1136512, EP 1046675, EP 1057870, EP 1155065, EP 506495 et EP 504058.

Dans le procédé en deux étapes, on fabrique d'abord les blocs polyamides puis dans une deuxième étape on accroche les blocs polyamides et les blocs polyéthers. Les blocs polyétherdiols selon l'invention sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR 2 846 332. La méthode générale de préparation des copolymères PEBA de l'invention ayant des liaisons amide entre les blocs PA et les blocs PE est connue et décrite, par exemple dans le brevet européen EP 1482 011.

La réaction de formation du bloc PA se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord tout ou partie du polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au plus 100 mbar, de préférence d'au plus 50 mbar, de préférence d'au plus 20 mbar, de préférence au plus 10 mbar, à une température telle que les réactifs et les copolymères obtenus soient à l'état fondu. A titre d'exemple, cette température peut être comprise entre 100 et 300°C et le plus souvent entre 200 et 250°C. La réaction est suivie par la mesure du couple de torsion exercé par le polymère fondu sur l'agitateur ou par la mesure de la puissance électrique consommée par l'agitateur. La fin de la réaction est déterminée par la valeur du couple ou de la puissance cible.

On pourra également ajouter pendant la synthèse, au moment jugé le plus opportun, une ou plusieurs molécules utilisées comme anti-oxydant, par exemple l'Irganox® 1010 ou l'Irganox® 245.

Si les copolymères à blocs décrits ci-dessus comprennent généralement au moins un bloc polyéther PTMG souple et au moins un bloc PA 6.12 rigide, il est évident que la présente invention couvre en fait tous les copolymères comprenant deux, trois, quatre (voire plus) blocs différents choisis parmi ceux décrits dans la présente description, dès l'instant que les blocs polytétraméthylène glycol sont issus en totalité de matières renouvelables.

Le copolymère à blocs de l'invention peut aussi bien être utilisé seul qu'en mélange, ledit copolymère représentant en masse de 5 à 100%, de préférence de 5 à 70%, de préférence de 5 à 30%, sur la masse totale du mélange.

Le copolymère selon l'invention peut être additivé avec des stabilisants, des plastifiants, des lubrifiants, des charges naturelles ou organiques, des colorants, des pigments, de nacres, des agents antimicrobiens, des agents ignifugeants, des agents antistatiques, des agents modifiant la viscosité du copolymère, et/ou tout autre additif bien connu de l'homme du métier dans le domaine des polymères thermoplastiques.

La présente invention a également pour objet un procédé de préparation d'un copolymère tel que défini ci-dessus. Le procédé selon l'invention comprend l'étape de fourniture de polytétraméthylène glycol issu de tétrahydrofurane issu en totalité de matières renouvelables et contenant du 14C et la transformation par synthèse en copolymère à blocs.

Selon un mode de réalisation, ladite étape de fourniture de PE du procédé de l'invention comprend en outre une étape préalable de production de tétrahydrofurane issu en totalité de matières renouvelables à partir de furfural.

Cette production de PE (PTMG ici) comprend une étape de polymérisation par ouverture de cycle du THF, catalysée par de l'acide fluorosulfonique, et une étape comprenant l'hydrolyse et des extractions à l'eau afin de retirer les groupements ester sulfate liés au polymère, l'acide restant et les chaînes polyéther courtes solubles dans l'eau.

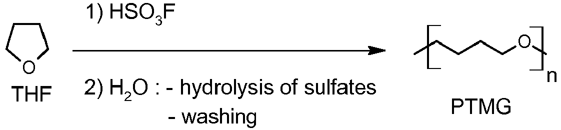

De manière alternative, et de plus en plus couramment, le cycle THF peut être ouvert par catalyse acide puis on le fait réagir avec de l'anhydride acétique pour former du diacétate de PTMG, qui est ensuite converti en polyéter glycol via alcoolyse.

Selon un autre mode de réalisation, ladite étape de fourniture de PE, tel que le PTMG, à partir de THF du procédé de l'invention inclut en outre une étape préalable de production dudit tétrahydrofurane à partir de furfural (2-furaldéhyde). La production de THF à partir de furfural implique la décarbonylation catalytique en furane et l'hydrogénation du furane obtenu en THF, conformément aux réactions suivantes :

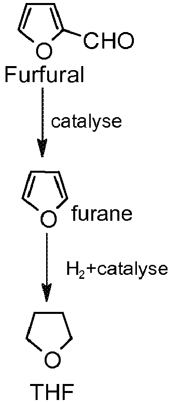

Selon encore un autre mode de réalisation, ladite étape de fourniture de PE (PTMG ici) à partir de furfural du procédé de l'invention inclut en outre une étape préalable de production dudit furfural à partir de biomasse végétale. Le furfural est obtenu à partir de matières végétales contenant des pentosanes.

La matière première contenant des pentosanes mise en oeuvre peut comprendre différents déchets végétaux, tels que rafles et épis de maïs, balles d'avoine, de riz, de coton ou autres résidus d'origine agricole, ou matières végétales à structure rigide, comme des souches de bois, ou encore des déchets de scieries tels que chutes de scierie, copeaux, sciure, poussière de bois.

L'hydrolyse en milieu acide des pentosanes permet d'obtenir des pentoses, qui, par déshydratation, donnent le furfural, conformément aux réactions suivantes:

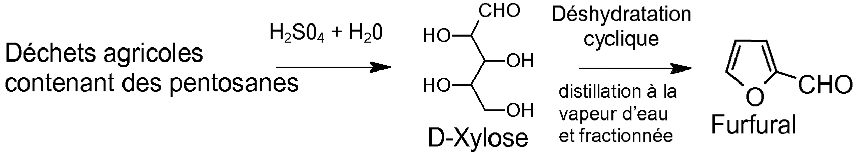

Les conditions opératoires ainsi que les variantes de ce procédé de fabrication de furfural sont bien connues de l'homme du métier, et sont décrites par exemple dans les documents de brevet US1735084, FR1181953, DE719704, DE740602, FR720424, GB922685, EP0033323 et dans le document « Procédé Agrifurane » des « Techniques de l'ingénieur - Génie Chimique », Vol. 4, page J.6020-1501.

L'acide utilisé comme catalyseur peut être par exemple de l'acide sulfurique plus ou moins dilué, de l'acide phosphorique, un acide alcane-sulfonique, de l'acide chlorhydrique.

L'hydrolyse des pentosanes contenus dans la matière végétale, en présence d'acide permet d'obtenir une solution de pentoses. Cette solution de pentoses est déshydratée pour obtenir du furfural, par action de la vapeur d'eau. Conformément à l'invention, le furfural obtenu est soumis à un processus de purification approprié, pour obtenir du furfural pur.

Le procédé selon l'invention permet d'obtenir un copolymère à blocs à partir de THF d'origine renouvelable, et de performances identiques (voire meilleures) à celles des copolymères correspondants (même formule chimique) mais d'origine fossile.

En définitive, le procédé de fabrication de copolymères à blocs de l'invention permet de diminuer, voire de supprimer complètement la consommation de matières premières d'origine pétrolière, et de faire appel à des matières premières issues de la culture de végétaux. Il permet en outre de diminuer les émissions de gaz à effets de serre.

## Revendications

1. Copolymère à blocs polyamide 6.12 et polytétraméthylène glycol, le bloc polytétraméthylène glycol étant issu en totalité de matières renouvelables.

2. Copolymère à blocs selon la revendication 1 comprenant :
- de 1 à 99% de bloc polytétraméthylène glycol souple, et
- de 1 à 99% de bloc polyamide 6.12 rigide.

3. Copolymère selon la revendication 2, dans lequel :
- la proportion massique dudit bloc polytétraméthylène glycol souple représente de 5 à 95%,
- la proportion massique dudit bloc polyamide 6.12 rigide représente de 5 à 95%,
sur la masse totale du copolymère.

4. Copolymère selon l'une quelconque des revendications 2 ou 3, dans lequel ledit bloc polyamide 6.12 rigide est issu au moins partiellement de matières premières renouvelables.

5. Copolymère selon l'une quelconque des revendications 2 à 4, dans lequel ledit bloc polyamide 6.12 rigide est issu en totalité de matières renouvelables.

6. Copolymère selon l'une quelconque des revendications précédentes, comprenant une teneur en bio-carbone d'au moins 1%, qui correspond à un ratio isotopique de ¹⁴C/¹²C d'au moins 1,2.10⁻¹⁴.

7. Copolymère selon l'une quelconque des revendications précédentes, comprenant une teneur en bio-carbone supérieure à 5%.

8. Procédé de préparation de copolymère à blocs conforme à celui de l'une quelconque des revendications précédentes, comprenant l'étape de fourniture de polytétraméthylène glycol issu de tétrahydrofurane contenant du ¹⁴C et la transformation par synthèse en copolymère à blocs.

9. Procédé selon la revendication 8, dans lequel l'étape de fourniture comprend une étape de production de polytétraméthylène glycol à partir de tétrahydrofurane.

10. Procédé selon la revendication 9, dans lequel l'étape de fourniture comprend une étape de production dudit tétrahydrofurane à partir de furfural.

11. Procédé selon la revendication 10, dans lequel l'étape de fourniture comprend une étape de production dudit furfural à partir de biomasse végétale.

12. Procédé selon la revendication 11, dans lequel ledit furfural est produit par hydrolyse de pentosanes.

13. Utilisation de copolymère à blocs conforme à celui de l'une quelconque des revendications 1 à 7, dans l'automobile, les textiles, les tissés, les non-tissés, l'habillement, les chaussures, les articles de sport, les articles de loisirs, l'électronique, le matériel informatique, les équipements de santé, les additifs industriels, l'emballage et/ou les produits ménagers.

14. Utilisation selon la revendication 13, dans laquelle le copolymère à blocs conforme à celui de l'une quelconque des revendications 1 à 7 est utilisé dans les tableaux de bord, les airbags, les semelles de chaussure de sport, les balles de golf, les tubes à usage médical, les cathéters, les ballons d'angioplastie, les courroies péristaltiques, les bandes de courroie transporteuse, les produits imper-respirant, les additifs antistatiques, les peaux, et/ou les cuirs synthétiques.

15. Utilisation selon la revendication 13 ou 14 dans laquelle le copolymère à blocs conforme à celui de l'une quelconque des revendications 1 à 7 est utilisé seul ou en mélange, ledit copolymère représentant en masse de 5 à 100%.

## Patentansprüche

1. Polyamid 6.12- und Polytetramethylenglykol-Blockcopolymer, wobei der Polytetramethylenglykolblock vollständig aus erneuerbaren Stoffen stammt.

2. Blockcopolymer nach Anspruch 1, umfassend:
- zu 1 - 99 % einen weichen Polytetramethylenglykolblock und
- zu 1 - 99% einen steifen Polyamid 6.12-block.

3. Copolymer nach Anspruch 2, wobei:
- der Massenanteil des weichen Polytetramethylenglykolblocks 5 - 95 % darstellt,
- der Massenanteil des steifen Polyamid 6.12-blocks 5 - 95 % darstellt,
bezogen auf die Gesamtmasse des Copolymers.

4. Copolymer nach einem der Ansprüche 2 oder 3, wobei der steife Polyamid 6.12-Block mindestens teilweise aus erneuerbaren Rohstoffen stammt.

5. Copolymer nach einem der Ansprüche 2 - 4, wobei der steife Polyamid 6.12-Block ganz aus erneuerbaren Rohstoffen stammt.

6. Copolymer nach einem der vorstehenden Ansprüche, umfassend einen Biokohlenstoffgehalt von mindestens 1 %, was einem ¹⁴C/¹²C-Isotopenverhältnis von mindestens 1,2 x 10⁻¹⁴ entspricht.

7. Copolymer nach einem der vorstehenden Ansprüche, umfassend einen Biokohlenstoffgehalt von mehr als 5 %.

8. Verfahren zur Herstellung eines Blockcopolymers nach einem der vorstehenden Ansprüche, umfassend den Schritt des Vorsehens von Polytetramethylenglykol, das aus ¹⁴C-haltigem Tetrahydrofuran abgeleitet ist, und synthetische Umwandlung in ein Blockcopolymer.

9. Verfahren nach Anspruch 8, wobei der Schritt des Vorsehens einen Schritt des Herstellens von Polytetramethylenglykol aus Tetrahydrofuran umfasst.

10. Verfahren nach Anspruch 9, wobei der Schritt des Vorsehens einen Schritt des Herstellens des Tetrahydrofurans aus Furfural umfasst.

11. Verfahren nach Anspruch 10, wobei der Schritt des Vorsehens einen Schritt des Herstellens des Furfurals aus pflanzlicher Biomasse umfasst.

12. Verfahren nach Anspruch 11, wobei das Furfural durch Hydrolyse von Pentosanen hergestellt wird.

13. Verwendung eines Blockcopolymers nach einem der Ansprüche 1 - 7 im Kfz-, Textilien-, Vliesstoff-, Kleidungs-, Schuh-, Sportartikel-, Freizeitartkel-, Elektronik- und Informatikbereich, sowie in Gesundheitseinrichtungen, industriellen Zusatzstoffen, Verpackungen und/oder Haushaltsprodukten.

14. Verwendung nach Anspruch 13, wobei das Blockcopolymer nach einem der Ansprüche 1 - 7 in Armaturenbretten, Airbags, Turnschuhsohlen, Golfbällen, medizinischen Röhren, Kathetern, Angioplastieballons, peristaltischen Riemen, Förderbändern, atmungsaktiven Produkten, antistatischen Zusatzstoffen, Pelzen und/oder synthetischen Ledern verwendet wird.

15. Verwendung nach Anspruch 13 und 14, wobei das Blockcopolymer nach einem der Ansprüche 1 - 7 allein oder in einer Mischung verwendet wird, wobei das Copolymer 5 - 100 Masse-% darstellt.

## Claims

1. A polyamide 6.12 and polytetramethylene glycol block copolymer, wherein the polytetramethylene glycol block is totally derived from renewable materials.

2. The block copolymer of claim 1, comprising:
- from 1 to 99% of flexible polytetramethylene glycol block, and
- from 1 to 99% of rigid polyamide 6.12 block.

3. The copolymer of claim 2, wherein:
- the proportion by mass of said flexible polytetramethylene glycol block represents from 5 to 95%,
- the proportion by mass of said rigid polyamide 6.12 block represents from 5 to 95%,
of the total mass of the copolymer.

4. The copolymer of any one of claims 2 or 3, wherein said rigid polyamide 6.12 block is derived at least partially from renewable raw materials.

5. The copolymer of any one of claims 2 to 4, wherein said rigid polyamide 6.12 block is totally derived from renewable materials.

6. The copolymer of any one of the preceding claims, comprising a content of biocarbon of at least 1%, which corresponds to a ¹⁴C/¹²C isotope ratio of at least 1.2×10⁻¹⁴.

7. The copolymer of any one of the preceding claims, comprising a content of biocarbon above 5%.

8. A method for preparing the block copolymer of any one of the preceding claims, comprising the step of supplying polytetramethylene glycol derived from tetrahydrofuran containing ¹⁴C and converting by synthesis to a block copolymer.

9. The method of claim 8, wherein the supplying step comprises a step of polytetramethylene glycol production from tetrahydrofuran.

10. The method of claim 9, wherein the supplying step comprises a step of tetrahydrofuran production from furfural.

11. The method of claim 10, wherein the supplying step comprises a step of furfural production from plant biomass.

12. The method of claim 11, wherein said furfural is produced by hydrolysing pentosans.

13. The use of the block copolymer of any one of claims 1 to 7, in automobiles, textiles, woven fabrics, nonwovens, clothing, shoes, sports articles, leisure articles, electronics, computer equipment, health equipment, industrial additives, packaging and/or household products.

14. The use of claim 13, wherein the block copolymer of any one of claims 1 to 24 is used in instrument panels, airbags, soles of sports shoes, golf balls, tubes for medical use, catheters, angioplasty balloons, peristaltic bands, conveyor belts, breathable rainwear, antistatic additives, skin panels, and/or synthetic leather.

15. The use of claim 13 or 14, wherein the block copolymer of any one of claims 1 to 7 is used alone or mixed, said copolymer representing by mass from 5 to 100%.
